# EUROPÄISCHE PATENTSCHRIFT

(11) **EP 1 449 388 B1**
(45) Veröffentlichungstag und Bekanntmachung des Hinweises auf die Patenterteilung: **26.10.2005**
(21) Anmeldenummer: 02794961.9
(22) Anmeldetag: 29.11.2002
(51) Int. Cl.: H04Q 3/00

(54) **VERFAHREN ZUM BEREITSTELLEN VON LEISTUNGSMERKMALEN FÜR ALTERNATIV-VERBINDUNGEN VON PRIMÄR-VERBINDUNGEN**
METHOD FOR PROVIDING FEATURES TO ALTERNATIVE CONNECTIONS OF PRIMARY CONNECTIONS
PROCEDE POUR FOURNIR DES SERVICES A DES CONNEXIONS ALTERNATIVES DES CONNEXIONS PRIMAIRES

(30) Priorität: 30.11.2001 DE 10158822
(43) Veröffentlichungstag der Anmeldung: 25.08.2004
(73) Patentinhaber: SIEMENS AKTIENGESELLSCHAFT, 80333 München (DE)
(72) Erfinder: HIPFINGER, Walter, A-1220 Wien (AT)
(86) Internationale Anmeldenummer: PCT/DE2002/004397
(87) Internationale Veröffentlichungsnummer: WO 2003/049367

(56) Entgegenhaltungen:
- EP-A- 1 006 738
- EP-A- 1 071 267

## Beschreibung

Die zugrunde liegende Erfindung beruht auf einem Verfahren zur Schaffung von Alternativ-Verbindungen zu Primär-Verbindungen, insbesondere zu Voice-over-IP-Verbindungen (VoIP), bei denen die Datenübertragung in einem Primärnetz und eine alternative Datenübertragung in einem - häufig weniger leistungsfähigen - Sekundärnetz stattfindet. Dabei kommt insbesondere eine Systemarchitektur mit geografisch verteilten Gateways zum Einsatz, welche über einen zentralen Call Processing Server (CPS) gesteuert werden.

Um die zentrale Idee der zugrunde liegenden Erfindung verstehen zu können, soll im Folgenden kurz auf die wichtigsten Aspekte und Möglichkeiten, Vor- und Nachteile der paketvermittelten Datenübertragung, die im Bereich der VoIP-Anwendungen eingesetzt wird, sowie auf die wichtigsten Ausführungsformen der Internet-Telefonie nach dem Stand der Technik eingegangen werden.

Bei paketvermittelten Netzen (engl.: "Packet-Switched Networks") handelt es sich um die Realisierung einer Vermittlungsart, bei der einer Verbindung kein durchgehender, physikalischer Kanal zur Verfügung gestellt wird. Stattdessen wird die zu übermittelnde Nachricht beim Sender in kleine, unter Umständen verschieden lange Nachrichtenpakete aufgeteilt, welche mit Zusatzdaten zur Identifikation von Sender und Empfänger und einer fortlaufenden Nummerierung im Header versehen werden und dann unabhängig voneinander einzeln durch das Netz geschickt werden. Jedes Paket wird dabei in den einzelnen Netzknoten analysiert. In Abhängigkeit von der aktuellen Netzlast wird dann in den einzelnen Netzknoten für jedes Paket entschieden, über welche abgehende Verbindung das jeweilige Paket weiter zum Empfänger geschickt wird. Folglich nehmen die Pakete in Abhängigkeit von der Netzauslastung unter Umständen unterschiedliche Wege bis zum Empfänger und kommen nicht in der Reihenfolge an, in der sie abgesendet wurden. Aus diesem Grund müssen die Pakete in den einzelnen Netzknoten unter Umständen zwischengespeichert und im Empfänger sortiert werden.

Die Vorteile der Paketvermittlungstechnik liegen in der guten Netzauslastung und der Ermöglichung einer Kommunikation zwischen Endgeräten mit unterschiedlichen Anschlussraten. Für zeitkritische Anwendungen sind paketvermittelte Netze jedoch wenig geeignet, da das Bearbeiten der Pakete in den einzelnen Netzknoten, die unterschiedlich langen Übertragungswege, sowie das Paketieren und Entpaketieren viel Zeit in Anspruch nehmen.

Als "Internet-Telefonie", "IP-Telefonie" bzw. "Voice-over-IP" (VoIP) bezeichnet man eine Kommunikationsart zur Übertragung von Sprachdaten zwischen zwei Kommunikationsteilnehmern über das Internet und/oder ein Intranet, bei der als Kommunikationsendgeräte Computer oder konventionelle Festnetz-, Schnurlos- bzw. Mobiltelefone verwendet werden. Neben Sprachübertragung und E-Mail sind Fax- und Videodienste sowie Voice Mail über das Internet bzw. Intranet möglich. Die Vereinheitlichung von Hard- und Software dieser verschiedenen Formen der Kommunikation wird in der Literatur dabei häufig mit dem Schlagwort "Unified Messaging" bezeichnet.

Bei der Internet-Telefonie sind in der Regel mit dem Telefonnetz und dem Internet zwei ursprünglich separate Typen von Netzen beteiligt. Für die Wegstrecken vom rufenden Kommunikationsteilnehmer bzw. vom gerufenen Kommunikationsteilnehmer bis zum jeweils nächsten Netz-Einwahlknoten werden in der Regel konventionelle Telefonverbindungen genutzt. Dagegen wird das Internet für die in der Regel sehr viel längere Wegstrecke zwischen den jeweiligen Netz-Einwahlknoten eingesetzt.

Je nachdem, welche Technik, die an einem Internet-Telefonat beteiligten Gesprächspartner verwenden, können sich unterschiedliche Verbindungsszenarien ergeben. Die Kommunikation läuft dabei entweder zwischen verschiedenen Computern, zwischen Computer und normalem Telefon oder zwischen verschiedenen Telefonen ab. Prinzipiell lassen sich somit vier Varianten der Internet-Telefonie unterscheiden:

### 1. Variante: Computer ↔ Internet ↔ Computer

Bei dieser Variante wählt sich der Nutzer von seinem Computer - beispielsweise einem PC - aus über einen sogenannten "Provider" ins Internet ein. Danach versucht er, über seine Telefonie-Software die feste IP-Adresse des gewünschten Kommunikationsteilnehmers anzuwählen. Wenn der Computer des gewünschten Kommunikationsteilnehmers mit dem Internet verbunden ist und der betreffende Kommunikationsteilnehmer seine Telefonie-Software geladen hat, kann er das Gespräch annehmen. Die Computer beider Kommunikationsteilnehmer sind dabei über das leitungsvermittelte öffentliche Telefonnetz (engl.: "Public Switched Telephone Network", PSTN) mit einem sogenannten Internet-Telefondiensteanbieter (engl.: "IP Telephony Service Provider", ITSP) verbunden, von wo aus sie im paketvermittelten Internet Sprachdaten übertragen können.

### 2. Variante: Computer ↔ Internet ↔ Telefon

Hierbei wählt sich der Nutzer von seinem Computer aus über seinen Provider ins Internet ein. Danach wählt er die Nummer des gewünschten Kommunikationsteilnehmers über die Telefonie-Software an. Von der Software werden die Datenpakete zu einem dem gewünschten Kommunikationsteilnehmer geografisch nächstgelegenen "Gateway" geschickt. Gateways sind spezielle Schnittstellen zwischen Netzen verschiedener Netzbetreiber oder nationalen Netzen, die Nebenstellenanlagen oder Vermittlungsstellen miteinander über das Internet koppeln und zur Gebührenerfassung, zur Umsetzung unterschiedlicher Signalisierungsprozeduren sowie zur Geschwindigkeitsanpassung dienen. Mit ihrer Hilfe wird beispielsweise ermöglicht, dass von einem herkömmlichen Telefonanschluss zu einem anderen herkömmlichen Telefonanschluss durch Wählen der Telefonnummer und Nutzung eines speziellen Internet-Zugangscodes telefoniert werden kann. Von dem nächstliegenden Gateway werden die Sprachdaten in das lokale PSTN übergeben. Dieses Verfahren stellt hohe Anforderungen an die Infrastruktur des Anbieters. Um Internet-Telefonie kostengünstig anbieten zu können, muss in jedem Land auf der Welt mindestens ein Gateway zwischen Internet und lokalem Telefonnetz installiert sein.

### 3. Variante: Telefon ↔ Internet ↔ Computer

Um über ein Telefon einen Computer zu erreichen, muss eine Verbindung zu einem Internet-Telefondienstanbieter aufgebaut werden. Erst danach kann der gewünschte Kommunikationsteilnehmer angewählt werden. Voraussetzung dafür ist, dass der Computer des gewünschten Kommunikationsteilnehmers eingeschaltet, seine Telefonie-Software geladen und sein Computer mit dem Internet verbunden ist.

### 4. Variante: Telefon ↔ Internet ↔ Telefon

Bei dieser Lösung wählt sich der Nutzer von seinem Telefonanschluss über das leitungsvermittelte PSTN in ein Gateway ein. Nach dem Einwählen in ein Gateway wählt der Nutzer den ihm vom Netzbetreiber zugeteilten Internet-Zugangscode (engl.: "Personal Identification Number", PIN) und schließlich die Ziel-Rufnummer des gewünschten Kommunikationsteilnehmers. Das Gateway-System ermittelt dann anhand der gewählten Ziel-Rufnummer oder Teilen davon über eine Routing-Tabelle das zu diesem Ziel geografisch nächstgelegene Gateway, welches seinerseits durch eine IP-Adresse identifizierbar ist, und fordert dieses auf, eine Verbindung zum gewünschten Kommunikationsteilnehmer über das dortige lokale PSTN zu realisieren. Sobald dies erfolgt ist, erhält der rufende Kommunikationsteilnehmer ein Signal und kann sprechen. Dabei werden die Sprachdaten paketorientiert über das Internet übertragen.

Alle vier Varianten können sowohl über das weltweite Internet als auch über ein firmen- oder organisationsgebundenes Intranet - dort in der Regel mit besserer Übertragungsqualität - realisiert werden.

Ein grundlegendes Element eines Internet-Telefoniesystems ist der sogenannte "Call Processing Server" (CPS), oft auch "Gatekeeper" genannt. Er besteht aus einer Reihe von Software-Applikationen, die auf einem oder mehreren Servern laufen. Diese können sich an irgendeinem Punkt innerhalb des logischen IP-Netzes befinden. In seiner einfachsten Form liefert ein CPS eine Übersicht über den Status aller Clients, die zu einer bestimmten Domäne gehören. Seine Funktion sind gemäß dem H.323-Standard der International Telecommunications Union (ITU) definiert. Diese Funktionen umfassen unter anderem die Auflösung von Adressen (von E.164 nach IP und umgekehrt) und diverse Authentifikations- und Autorisierungsaufgaben, zentrale Rufverarbeitung und Routing. Darüber hinaus führt es auch vermittlungstechnische Funktionen (Verbindungssteuerung einschließlich Verbindungsaufbau und -abbau) zu Clients und Gateways innerhalb des IP-Netzes durch und verwaltet eine Datenbank, in der Nutzerprofil- und Netzwerkkonfigurations-Informationen gespeichert werden. Dabei variiert die vom CPS bereitgestellte Funktionalität allerdings stark von Hersteller zu Hersteller.

Wenn einzelne Sprachkanäle nicht über das Internet geschaltet werden können und Alternativverbindungen zur Voice-over-IP-Verbindung über leitungsvermittelte Netze geschaltet werden müssen, geht für den Benutzer unter Umständen die Vielfalt der vom Call Processing Server steuerbaren Leistungsmerkmale der VoIP-Verbindung verloren. In diesem Fall sind gewisse Leistungsmerkmale, wie beispielsweise das Herstellen einer Konferenzschaltung, nicht mehr nutzbar.

Ein wesentliches Kennzeichen des leitungs- bzw. paketvermittelten Datenverkehrs im ISDN ist die konsequente Trennung der Übertragung von Signalisierungs- und Nutzdaten, die auf unterschiedlichen Kanälen durchgeführt wird. Von Bedeutung sind dabei in erster Linie sogenannte B- und D-Kanäle. Für die Übertragung von digitalisierten Sprachsignalen wird dabei ein erster B-Kanal mit einer Übertragungsrate von 64 kBit/s verwendet. Parallel dazu kann dem Nutzer ein zweiter B-Kanal zur Übertragung von Daten angeboten werden, der ebenfalls über eine Übertragungsrate von 64 kBit/s verfügt. Dabei wird eine komplette S₀-Schnittstelle bereitgestellt, die für jeden Nutzer den Anschluss von bis zu acht verschiedenen Kommunikationsendgeräten erlaubt, auch wenn am Telefon eines Nutzers kein Datenanschluss vorhanden sein sollte. Das bedeutet, dass in jedem Fall beide B-Kanäle in beiden Kommunikationsrichtungen zur Verfügung stehen und mehrere Kommunikationsendgeräte gleichzeitig aktiv sein können, indem sie je einen der beiden B-Kanäle simultan verwenden. Im Gegensatz dazu wird für die Übertragung von Signalisierungsdaten zusätzlich ein D-Kanal mit einer Übertragungsrate von 16 kBit/s (D₁₆) bzw. 64 kBit/s (D₆₄) verwendet. Neben dem Austausch von Signalisierungsdaten können Nutzer auch Datenpakete auf dem D-Kanal ins Netz schicken, die wiederum vom Netz an andere Kommunikationsteilnehmer weitergeleitet werden. Anders als beim B-Kanal können jedoch über den D-Kanal keine Verbindungen aufgebaut werden.

Nach dem Stand der Technik wird durch die strenge Trennung von Signalisierungs- und Nutzdaten gewährleistet, dass der Nutzer auch bei einer Umleitung der Nutzdaten über ein Alternativ-Netz keinen Verlust von Information oder Leistungsmerkmalen hinnehmen muss, da der D-Kanal die Signalisierungs- und Steuerinformation stets korrekt überträgt.

Aus EP-A-1 006 738 (NORTEL NETWORKS), 7 Juni 2000, ist auch ein Verfahren für einen Wechsel von einer Kommunikationsverbindung eines primären Netzes (IP-Netwerk) auf eine Alternativverbindung (Telefon-Netzwerk) bekannt.

Ausgehend von dem oben genannten Stand der Technik, widmet sich die vorliegende Erfindung der Aufgabe, ein Verfahren bereitzustellen, mit dessen Hilfe Alternativ-Verbindungen zu Primär-Verbindungen hergestellt werden, bei denen die Daten-übertragung über ein Primärnetz oder alternativ über ein Sekundärnetz erfolgt, wobei bei dem Ausweichen auf Alternativ-Verbindungen eingerichtete Leistungsmerkmale möglichst weitgehend beibehalten werden.

Diese Aufgabe wird erfindungsgemäß durch die Merkmale der unabhängigen Patentansprüche gelöst. Vorteilhafte Ausführungsbeispiele, die den Gedanken der Erfindung weiterbilden, sind in den abhängigen Patentansprüchen definiert.

Die zugrunde liegende Erfindung betrifft eine Technik zur Bereitstellung von Alternativ-Verbindungen zu Primär-Verbindungen, insbesondere zu Voice-over-IP-Verbindungen mit Hilfe eines Call Processing Servers. In diesem Zusammenhang kann eine Systemarchitektur mit geografisch verteilten Gateways zum Einsatz kommen, die über den zentralen Call Processing Server gesteuert werden. Die standardisierten Call Processing-Abläufe für den Zugang zu einem leitungsvermittelten Netz können dabei ohne Änderung im Rahmen einer Converging Network Solution übernommen werden.

Weitere Eigenschaften, Merkmale, Vorteile und Anwendungen der Erfindung resultieren aus den abhängigen Patentansprüchen sowie aus der folgenden Beschreibung eines Ausführungsbeispiels der Erfindung, welches anhand der folgenden Zeichnungen veranschaulicht wird.

Hierbei zeigen:
- Fig. 1:: ein vereinfachtes Blockdiagramm 100 zur Veranschaulichung einer beispielhaften AlternativVerbindung zu einer paketvermittelten VoIP-Verbindung, und
- Fig. 2a,b:: ein Flussdiagramm 200 zur Darstellung der Bereitstellung von Alternativ-Verbindungen zu paketvermittelten VoIP-Verbindungen über leitungsvermittelte Netze.

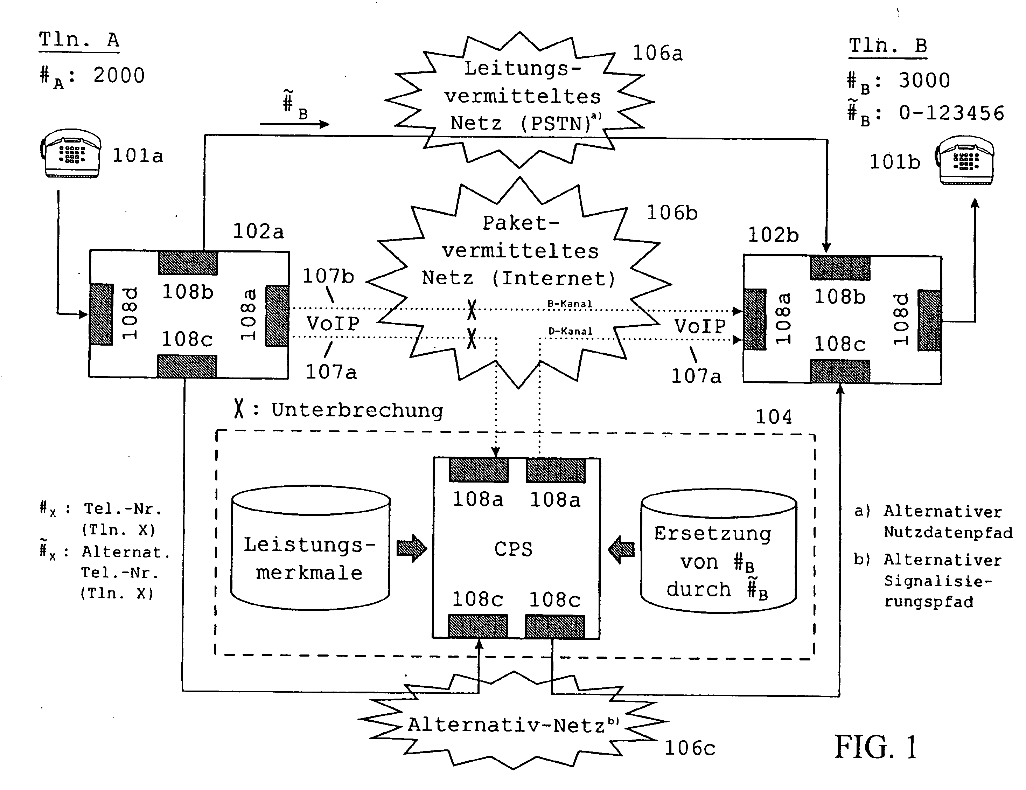

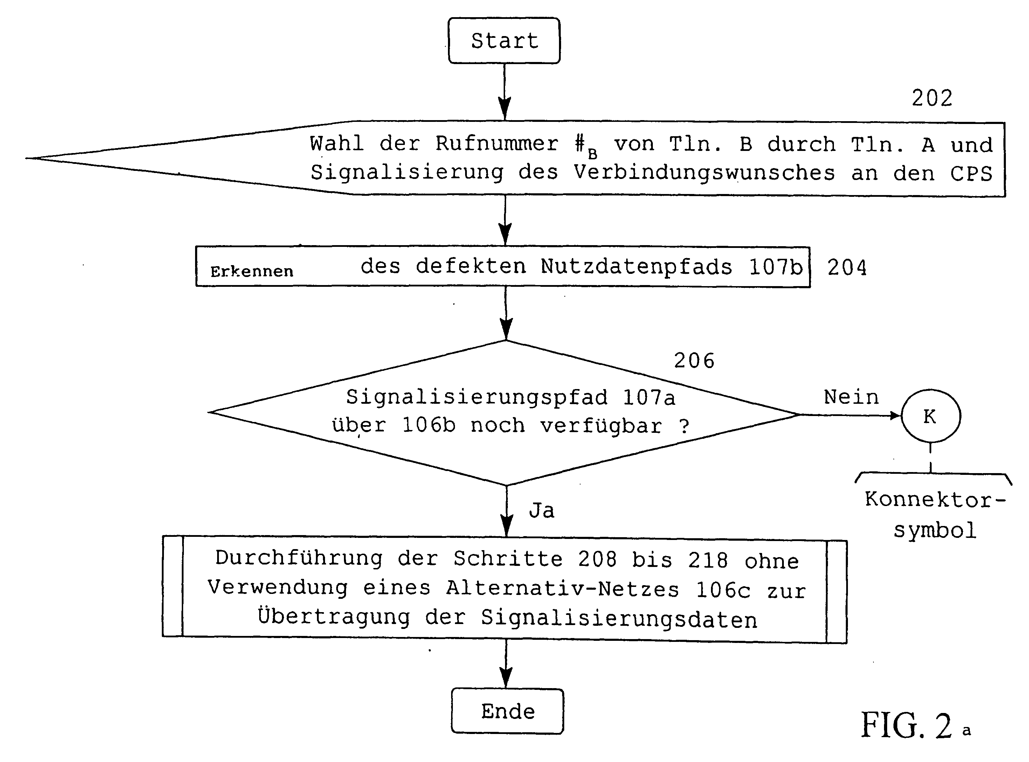

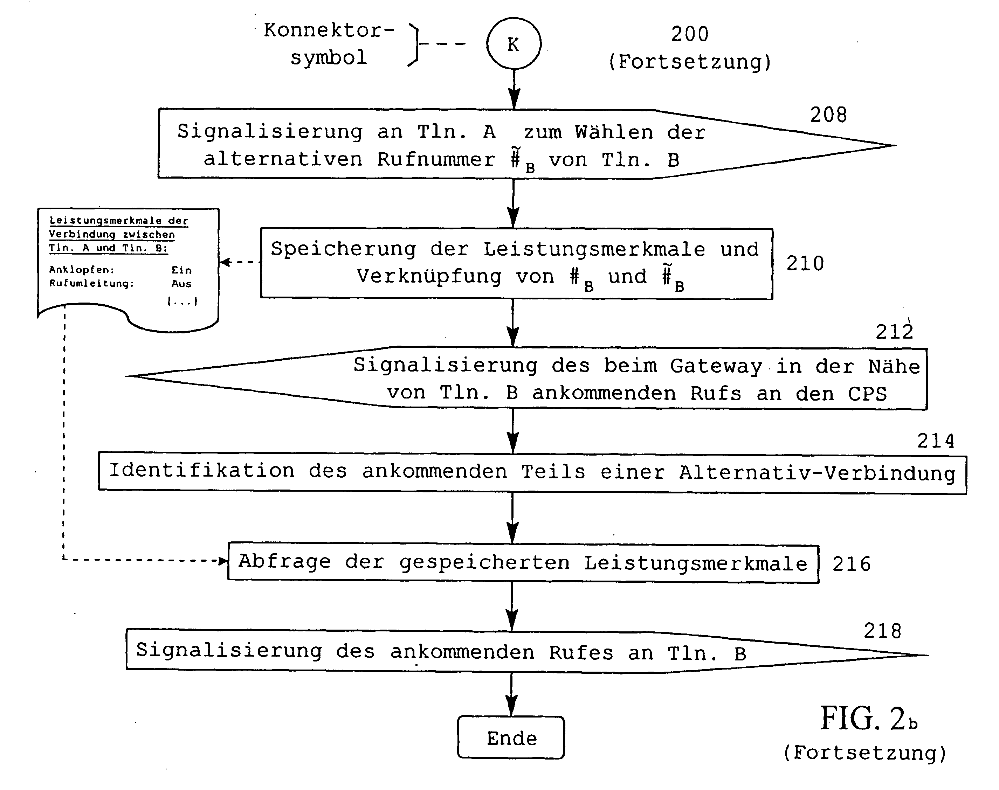

Im Folgenden werden die Funktionen der in einem Ausführungsbeispiel der zugrunde liegenden Erfindung enthaltenen Komponenten, wie in den Figuren 1 und 2 abgebildet, näher beschrieben.

Bezugnehmend auf Fig. 1, soll die vorliegende Erfindung zunächst schematisch erläutert werden. Abgebildet ist ein vereinfachtes Blockdiagramm zur Veranschaulichung der im Rahmen der erfindungsgemäßen Lösung verwendeten Systemarchitektur mit geografisch verteilten IP Shelves bzw. Gateways 102a, 102b und einem Call Processing Server 104. In diesem Zusammenhang ist ein Beispiel einer paketvermittelten Voice-over-IP-Verbindung zwischen zwei über Endgeräte 101a, 101b und Gateways 102a, 102b verbundenen Kommunikationsteilnehmer A und B dargestellt, wobei in dem dargestellten Szenario sowohl ein Signalisierungspfad 107a (D-Kanal) als auch ein Nutzdatenpfad 107b (B-Kanal) der Voice-over-IP-Verbindung unterbrochen ist. Dem Kommunikationsteilnehmer A ist dabei die Anschlusskennung #A:2000 und dem Kommunikationsteilnehmer die Anschlusskennung #B:3000 zugeordnet. Da der Signalisierungspfad 107a und der Nutzdatenpfad 107b nicht mehr über das Internet 106b geschaltet werden können, müssen Alternativwege zur Voice-over-IP-Verbindung über Alternativ-Netze geschaltet werden. Bei dem in Fig. 1 abgebildeten Ausführungsbeispiel kommt dabei ein Alternativ-Netz 106c für den Signalisierungspfad 107a und ein leitungsvermitteltes Netz 106a als Alternativ-Netz für den Nutzdatenpfad 107b zum Einsatz. Bei Letzterem kann es sich beispielsweise um das leitungsvermittelte Telefonnetz (PSTN) der Deutschen Telekom handeln.

Für die beiden über die Endgeräte 101a, 101b und die Gateways 102a, 102b an der Voice-over-IP-Verbindung beteiligten Kommunikationsteilnehmer A und B macht sich der Ausfall der Voice-over-IP-Verbindung über das Internet 106b nicht bemerkbar, da die Alternativ-Verbindung denselben Leistungsumfang bereitstellt wie die Voice-over-IP-Verbindung, wie im Folgenden erklärt wird.

In Fig. 2 ist ein Flussdiagramm abgebildet, dass das erfindungsgemäße Verfahren zur Bereitstellung von Alternativ-Verbindungen zu paketvermittelten Voice-over-IP-Verbindungen über leitungsvermittelte Netze in vier Schritten illustriert. Im Folgenden sollen die einzelnen Schritte des Verfahrens im Detail erläutert werden.

### Schritt #1:

Zuerst wird in einem Teilschritt 202 von dem Kommunikationsendgerät 101a des Teilnehmers A mit der Anschlusskennung #A:2000 die Anschlusskennung #B:3000 des Kommunikationsendgeräts 101b des zu rufenden Teilnehmers B angewählt und dabei der Verbindungswunsch dem Call Processing Server 104 signalisiert. Daraufhin erkennt der Call Processing Server 104 in einem nächsten Teilschritt 204, dass der Nutzdatenpfad 107b durch das primäre Netzwerk 106b (in diesem Fall das paketvermittelte Internet) z.B. wegen eines abgeschalteten defekten Routers, infolge einer schlechten Übertragungsqualität oder dgl. nicht verfügbar ist.

### Schritt #2:

Da der Signalisierungspfad 107a vom Call Processing Server 104 zu den Gateways bzw. Access Points 102a, 102b der Kommunikationsendgeräte 101a, 101b immer verfügbar sein muss, bedeutet dies, dass der Signalisierungspfad 107a durch das primäre Netzwerk 106b entweder immer noch verfügbar ist oder - wie in diesem Beispiel angenommen werden soll - zu einem Alternativ-Netz 106c umgeschaltet wurde. Es muss also in einem weiteren Teilschritt 206 festgestellt werden, welche der beiden Möglichkeiten vorliegt.

### Schritt #3:

Wurde der Signalisierungspfad 107a zum Alternativnetz 106c umgeleitet, signalisiert der Call Processing Server 104 dem Gateway 102a in einem Teilschritt 208, eine alternative Rufnummer #B:0-1234567 zu wählen, um das Kommunikationsendgerät 101b des Teilnehmers B zu erreichen. In dem in Fig. 1 skizzierten Ausführungsbeispiel ist das die alternative Rufnummer #B:0-1234567. Die vorangestellte "0" repräsentiert in diesem Zusammenhang den Zugangscode zu einem leitungsvermittelten Netz 106a. (Die Umschaltung auf andere leitungsvermittelte Netze eine in vielen Fällen bereits implementierte Standard-Prozedur zur Aufrechterhaltung von Telefonverbindungen, die über leitungsvermittelte Telefonnetze geführt werden.) Der Call Processing Server 104 speichert dann in einem weiteren Teilschritt 210 die Leistungsmerkmale der jeweiligen Kommunikationsverbindung und die Verknüpfung zwischen der ursprünglich gewählten Rufnummer #B:3000 und der alternativen Rufnummer #B:0-1234567.

### Schritt #4:

Ein beim Gateway 102b mittels der alternativen Rufnummer #B:0-1234567 ankommender Verbindungswunsch wird in einem Teilschritt 212 dem Call Processing Server 104 signalisiert. Im nächsten Teilschritt 214 ermittelt dieser, dass es sich dabei um den ankommenden Teil einer Alternativ-Verbindung handelt. Daraufhin ruft der Call Processing Server 104 in einem weiteren Teilschritt 216 die in Schritt 210 abgespeicherten Leistungsmerkmale der jeweiligen Kommunikationsverbindung und signalisiert in einem letzten Teilschritt 218 dem Kommunikationsendgerät 101b des Teilnehmers B den ankommenden Verbindungswunsch, als ob die Nutzdaten und Signalisierungsdaten der VoIP-Verbindung nie durch Alternativ-Netze 106a+c geleitet worden wären.

Im Rahmen der Erfindung werden also wie oben erläutert der abgehende Verbindungswunsch vom Kommunikationsendgerät 101a des Kommunikationsteilnehmers A zu einem leitungsvermittelten Netz 106a und der ankommende Verbindungswunsch vom leitungsvermittelten Netz 106a zum Kommunikationsendgerät 101b des Kommunikationsteilnehmers B (also der abgehende und ankommende Teil einer Alternativ-Verbindung über das leitungsvermittelte Netz) als zusammengehörig identifiziert. Zwischen dem abgehenden Teil und dem ankommenden Teil der Alternativ-Verbindung wird dann eine Verknüpfung hergestellt. Dies geschieht im zentralen Call Processing Server 104, da hier die Daten für eine interne Verbindung ohnehin vorhanden sind. Für diese Verbindung werden dann alle Leistungsmerkmale zugelassen. Voraussetzung dafür ist natürlich, dass die Signalisierungspfade 107a zu den Gateways 102a, 102b nach wie vor funktionsfähig bleiben.

Die Verknüpfung zwischen dem abgehenden Teil und dem ankommenden Teil der Alternativ-Verbindung kann je nach Art des Alternativ-Netzes und der Alternativ-Verbindung auf unterschiedliche Weise erzeugt werden, zum Beispiel über die gewählte Rufnummer, sofern es sich bei der Alternativ-Verbindung um einen analogen Amtssatz handelt.

Eine andere Möglichkeit besteht in der Verwendung der gewählten Rufnummer und einer künstlichen Calling Party Number, sofern es sich um digitale Amtssätze mit mehreren B-Kanälen handelt. Der Nutzerzugang erfolgt in diesem Fall über einen Primärmultiplexanschluss bzw. Primärratenanschluss (engl.: "Primary Rate Interface", PRI).

Im Rahmen des erfindungsgemäßen Verfahrens wird eine ankommende Alternativ-Verbindung zuerst über den (alternativen) Signalisierungspfad 107a an den Call Processing Server 104 gemeldet. Aufgrund der Verknüpfung erkennt dieser, dass es sich bei der Kommunikationsverbindung um eine ankommende Alternativ-Verbindung handelt und verknüpft diese mit dem abgehenden Teil der Alternativ-Verbindung. Danach ruft der Call Processing Server 104 die Verbindungsdaten und Leistungsmerkmale der Kommunikationsverbindung ab (z.B. Anklopfen, Rufumleitung, Konferenzschaltung etc.) und sendet diese über den (alternativen) Signalisierungspfad 107a. Für das gerufene Kommunikationsendgerät 101b stellt sich somit die Verbindung als interne Verbindung dar, obwohl ein Alternativweg verwendet wurde.

Bei einem Ausführungsbeispiel der zugrunde liegenden Erfindung ist für die Art der Verknüpfung zwischen abgehendem und ankommendem Teil der Alternativ-Verbindung zusätzlich vorgesehen, dass nicht für jedes gerufene Kommunikationsendgerät 101b eine eigene alternative Nummer benötigt wird. Stattdessen kann eine alternative Rufnummer mit Hilfe des Call Processing Servers 104 aus einer Menge von alternativen Rufnummern dynamisch zugeteilt werden. Der Vorteil dieses Verfahrens besteht in einem geringeren Verbrauch an Amtsnummern, wodurch Kosteneinsparungen in einem beträchtlichen Umfang ermöglicht werden.

Die zugrunde liegende Erfindung kann allgemein dazu verwendet werden, alternative Verbindungen über das öffentliche Telefonnetz für den Benutzer wie interne Verbindungen erscheinen zu lassen. Dabei bleiben alle internen Leistungsmerkmale auch im Falle von Alternativ-Verbindungen verfügbar.

Insbesondere kann die vorliegende Erfindung in vorteilhafter Weise bei einer Architektur verwendet werden, bei der einzelne geografisch verteilte Gateways 102a, 102b innerhalb des IP-Netzes 106b mit Kommunikationsendgeräten einer Nebenstellenanlage verbunden sind.

## Patentansprüche

1. Verfahren zur Herstellung einer Alternativverbindung zu einer aus einem Nutzdatenpfad (107b) und einem Signalisierungspfad (107a) bestehenden Kommunikationsverbindung von einem ersten Teilnehmer (A) über ein primäres Netz (106b) zu einem zweiten Teilnehmer (B),
aufweisend die folgenden Schritte:
- Erfassung eines Störung eines Signalisierungspfads (107a) der Kommunikationsverbindung des primären Netzes (106b),
- Schaffung einer Alternativverbindung für den Signalisierungspfad (107a) unabhängig von dem Nutzdatenpfad (107b) über ein Alternativ-Netz (106c),
- Logische Verknüpfung des Signalisierungspfads (107a) des primären Netzes (106b) mit dem geschaffenen Signalisierungspfad des Alternativ-Netzes (106c), und
- Abspeicherung von Leistungsmerkmale der Kommunikationsverbindung des primären Netzes (106b) betreffenden Verbindungsdaten, die mittels des Signalisierungspfads (107a) des primären Netzes (106b) bereitgestellt wurden, um sie somit auch für den Signalisierungspfad (107a) des Alternativ-Netzes (106c) verfügbar zu machen.

2. Verfahren nach Anspruch 1,
**dadurch gekennzeichnet,**
- **dass** mittels der Verknüpfung des Signalisierungspfads (107a) des primären Netzes (106b) mit dem Signalisierungspfad (107a) des Alternativ-Netzes (106c) der abgehende Teil der Alternativ-Verbindung mit den ankommenden Teil verknüpft wird, und
- **dass** die abgespeicherten Verbindungsdaten aufgerufen und über den Signalisierungspfad (107a) des Alternativ-Netzes (106c) mitübertragen werden.

3. Verfahren nach Anspruch 1 oder 2,
**dadurch gekennzeichnet,**
**dass** als primäres Netz (106b) ein paketvermittelndes Netz und als Alternativ-Netz (106c) ein leitungsvermittelndes Netz verwendet wird.

4. Verfahren nach Anspruch 3,
**dadurch gekennzeichnet,**
**dass** als paketvermittelndes primäres Netz (106b) das Internet und/oder ein firmen- bzw. organisationsinternes Intranet verwendet wird.

5. Verfahren nach einem der Ansprüche 3 und 4,
**dadurch gekennzeichnet,**
**dass** als leitungsvermittelndes Alternativ-Netz (106a) ein öffentliches Telefonnetz (PSTN) verwendet wird.

6. Verfahren nach einem der vorhergehenden Ansprüche,
**dadurch gekennzeichnet,**
**dass** als Kommunikationsverbindung eine Übertragung von digitalisierten Sprachsignalen über eine Voice-over-IP-(VoIP)-Verbindung verwendet wird.

7. Verfahren nach einem der Ansprüche 1 bis 5,
**dadurch gekennzeichnet,**
**dass** als Kommunikationsverbindung eine Übertragung von digitalisierten Datensignalen über eine Internet- bzw. Intranet-Verbindung verwendet wird.

8. Verfahren nach einem der Ansprüche 1 bis 5,
**dadurch gekennzeichnet,**
**dass** als Kommunikationsverbindung eine multimediale Übertragung von digitalisierten Video- und/oder Audiosignalen über eine Internet- bzw. Intranet-Verbindung verwendet wird.

9. Verfahren nach Anspruch 1,
**dadurch gekennzeichnet,**
**dass** durch einen Verbindungssteuerungs-Server (104) im Falle eines nicht ordnungsgemäßen Nutzdatenpfades (107b) zwischen einem dem ersten Teilnehmer (A) zugeordneten rufenden Endgerät (101a) und einem dem zweiten Teilnehmer (B) zugeordneten gerufenen Endgerät (101b), folgende Schritte ausgeführt werden:
- Aufforderung (208) eines Gateways (102a) des rufenden Endgeräts (101a), das gerufene Endgerät (101b) unter einer alternativen Rufnummer (#B) für das Alternativ-Netz (106c) zu erreichen,
- Speicherung (210) der Leistungsmerkmale des nicht ordnungsgemäßen Nutzdatenpfads (107b) und Verknüpfung der ursprünglich gewählten mit der alternativen Rufnummer (#B),
- Erfassung (212) eines beim Gateway (102b) des gerufenen Endgeräts (101b) ankommenden Verbindungswunsches,
- Identifikation (214) des ankommenden Teils der alternativen Kommunikationsverbindung,
- Abfrage (216) der gespeicherten Leistungsmerkmale der unterbrochenen Kommunikationsverbindung, und
- Signalisierung (218) des ankommenden Verbindungswunsches an das gerufene Endgerät (101b).

10. Verfahren nach Anspruch 9,
**dadurch gekennzeichnet,**
**dass** die Verknüpfung zwischen dem abgehenden Teil und dem ankommenden Teil der alternativen Verbindung über eine gewählte Rufnummer hergestellt wird, wenn es sich bei dieser Rufnummer um einen analogen Amtssatz handelt.

11. Verfahren nach Anspruch 9,
**dadurch gekennzeichnet,**
**dass** die Verknüpfung zwischen dem abgehenden Teil und dem ankommenden Teil der alternativen Verbindung über eine gewählte Rufnummer und eine künstliche Calling Party Number hergestellt wird, wenn es sich um digitale Amtssätze mit mehreren B-Kanälen handelt.

12. Verfahren nach einem der Ansprüche 9 bis 11,
**dadurch gekennzeichnet,**
**dass** bei der Verknüpfung zwischen abgehendem und ankommendem Teil einer alternativen Verbindung für das gerufene Endgerät (101b) jeweils eine alternative Rufnummer mit Hilfe des Call Processing Servers (104) aus einer Menge von wieder verwendbaren alternativen Rufnummern dynamisch zugeteilt wird.

13. Call Processing Server zur Durchführung vermittlungstechnischer Funktionen im Internet,
**dadurch gekennzeichnet,**
**dass** er zur Durchführung eines Verfahrens nach einem der vorhergehenden Ansprüche konfiguriert ist.

14. Software-Applikation zum Betrieb eines im Internet lokalisierten Call Processing Servers (104),
**dadurch gekennzeichnet,**
**dass** sie ein Verfahren nach einem der Ansprüche 1 bis 12 implementiert.

## Claims

1. Method for creating an alternative connection to a communication connection comprising a user data path (107b) and a signalling path (107a) from a first subscriber (A) via a primary network (106b) to a second subscriber (B),
having the following stages:
- detection of a fault in a signalling path (107a) of the communication connection of the primary network (106b),
- creation of an alternative connection for the signalling path (107a), independent of the user data path, via an alternative network (106c),
- logical linking of the signalling path (107a) of the primary network (106b) with the created signalling path of the alternative network (106c), and
- storage of connection data relating to performance features of the primary network (106b) which is provided by means of the signalling path (107a) of the primary network (106b), so that it is also made available for the signalling path (107a) of the alternative network (106c).

2. Method according to claim 1,
**characterised in that**
- the outgoing part of the alternative connection is linked with the incoming part by means of the link from the signalling path (107a) of the primary network (106b) to the signalling path (107a) of the alternative network (106c), and **in that**
- the stored connection data is called and transferred via the signalling path (107a) of the alternative network (106c).

3. Method according to claim 1 or 2,
**characterised in that**
a packet-switching network is used as the primary network (106b) and a circuit-switching network is used as the alternative network (106c).

4. Method according to claim 3,
**characterised in that**
the internet and/or a corporate or organisational intranet is used as the packet-switching primary network (106b).

5. Method according to one of claims 3 or 4,
**characterised in that**
a public telephone network (PSTN) is used as a circuit-switching alternative network (106a).

6. Method according to one of the preceding claims,
**characterised in that**
a transfer of digitised voice signals via a voice-over IP (VoIP) connection is used as the communication connection.

7. Method according to one of claims 1 to 5,
**characterised in that**
a transfer of digitised data signals via an internet or intranet connection is used as the communication connection.

8. Method according to one of claims 1 to 5,
**characterised in that**
a multimedia transfer of digitised video and/or audio signals via an internet or intranet connection is used as the communication connection.

9. Method according to claim 1,
**characterised in that**
by means of a connection control server (104) in the case of an invalid useful data path (107b) between a calling terminal (101a) assigned to the first user (A) and a called terminal (101b) assigned to the second user (B), the following steps are implemented;
- requesting (208) a gateway (102a) of the calling terminal (101a) to reach the called terminal (101b) under an alternative call number (#B) for the alternative network (106c),
- storage (210) of the features of the invalid useful data path (107b) and linking of the originally dialled call number with the alternative call number(#B),
- recording (212) of the incoming connection request at the gateway (102b) of the called terminal (101b)
- identification (214) of the incoming part of the alternative communication connection,
- requesting (216) the stored features of the interrupted communication connection, and
- signalling (218) the incoming connection request to the called terminal (101b).

10. Method according to claim 9,
**characterised in that**
the link between the outgoing part and the incoming part of the alternative connection is created via a dialled call number, if this call number uses an analogue trunk circuit.

11. Method according to claim 9,
**characterised in that**
the link between the outgoing part and the incoming part of the alternative connection is created via a dialled call number and an artificial calling party number, if digital trunk circuits with a plurality of B-channels are used.

12. Method according to one of claims 9 to 11,
**characterised in that**
in the link between the outgoing and incoming part of an alternative connection for the called terminal (101b) an alternative call number
is dynamically allocated in each instance from a quantity of reusable alternative call numbers with the help of the call processing server (104).

13. Call processing server for executing switching functions on the internet,
**characterised in that**
it is configured for executing a method according to one of the above claims.

14. Software application for operating a call processing server (104) localised on the internet,
**characterised in that**
it implements a method according to one of claims 1 to 12.

## Revendications

1. Procédé pour établir une connexion alternative à une connexion de communication consistant en un chemin de données utiles (107b) et un chemin de signalisation (107a), allant d'un premier abonné (A) vers un deuxième abonné (B) en passant par un réseau primaire (106b),
comportant les étapes suivantes:
- détection d'une perturbation d'un chemin de signalisation (107a) de la connexion de communication du réseau primaire (106b),
- création d'une connexion alternative pour le chemin de signalisation (107a) indépendamment du chemin de données utiles (107b) par l'intermédiaire d'un réseau alternatif (106c),
- association logique du chemin de signalisation (107a) du réseau primaire (106b) avec le chemin de signalisation créé du réseau alternatif (106c) et
- mise en mémoire de données de connexion concernant des services de la connexion de communication du réseau primaire (106b), lesquelles ont été fournies au moyen du chemin de signalisation (107a) du réseau primaire (106b) pour les rendre ainsi disponibles y compris pour le chemin de signalisation (107a) du réseau alternatif (106c).

2. Procédé selon la revendication 1, **caractérisé en ce que**
- au moyen de l'association du chemin de signalisation (107a) du réseau primaire (106b) et du chemin de signalisation (107a) du réseau alternatif (106c), la partie sortante de la connexion alternative est associée à la partie entrante et
- les données de connexion mises en mémoire sont appelées et co-transmises par l'intermédiaire du chemin de signalisation (107a) du réseau alternatif (106c).

3. Procédé selon la revendication 1 ou 2, **caractérisé en ce qu'**est utilisé, en tant que réseau primaire (106b), un réseau à commutation de paquets et, en tant que réseau alternatif (106c), un réseau à commutation de lignes.

4. Procédé selon la revendication 3, **caractérisé en ce qu'**est utilisé, en tant que réseau primaire à commutation de paquets (106b), l'Internet et/ou un Intranet interne à une entreprise resp. à une organisation.

5. Procédé selon l'une des revendications 3 et 4, **caractérisé en ce qu'**est utilisé, en tant que réseau alternatif à commutation de lignes (106a), un réseau téléphonique public (PSTN).

6. Procédé selon l'une des revendications précédentes, **caractérisé en ce qu'**est utilisée, en tant que connexion de communication, une transmission de signaux vocaux numérisés par l'intermédiaire d'une connexion Voice-over-IP» (VoIP).

7. Procédé selon l'une des revendications 1 à 5, **caractérisé en ce qu'**est utilisée, en tant que connexion de communication, une transmission de signaux de données numérisés par l'intermédiaire d'une connexion Internet resp. Intranet.

8. Procédé selon l'une des revendications 1 à 5, **caractérisé en ce qu'**est utilisée, en tant que connexion de communication, une transmission multimédia de signaux vidéo et/ou audio numérisés par l'intermédiaire d'une connexion Internet resp. Intranet.

9. Procédé selon la revendication 1, **caractérisé en ce que** les étapes suivantes sont exécutées par un serveur de commande de connexion (104) dans le cas d'un chemin de données utiles non régulier (107b) entre un terminal appelant (101a) affecté au premier abonné (A) et un terminal appelé (101b) affecté au deuxième abonné (B):
- invitation (208) d'une passerelle (102a) du terminal appelant (101a) à joindre le terminal appelé sous un numéro d'appel alternatif (#B) pour le réseau alternatif (106c),
- mise en mémoire (210) des services du chemin de données utiles non régulier (107b) et association du numéro d'appel composé au départ avec le numéro d'appel alternatif (#B),
- détection (212) d'une demande de connexion entrant au niveau de la passerelle (102b) du terminal appelé (101b),
- identification (214) de la partie entrante de la connexion de communication alternative,
- interrogation (216) des services mis en mémoire de la connexion de communication interrompue et
- signalisation (218), au terminal appelé (101b), de la demande de connexion entrante.

10. Procédé selon la revendication 9, **caractérisé en ce que** l'association entre la partie sortante et la partie entrante de la connexion alternative est établie par l'intermédiaire d'un numéro d'appel ayant été composé, si ce numéro d'appel est un circuit analogique au réseau.

11. Procédé selon la revendication 9, **caractérisé en ce que** l'association entre la partie sortante et la partie entrante de la connexion alternative est établie par l'intermédiaire d'un numéro d'appel ayant été composé et d'un Calling Party Number artificiel s'il s'agit de circuits analogiques au réseau avec plusieurs canaux B.

12. Procédé selon l'une des revendications 9 à 11, **caractérisé en ce que**, lors de l'association entre partie sortante et partie entrante d'une connexion alternative, pour le terminal appelé (101b), respectivement un numéro d'appel alternatif est attribué dynamiquement à l'aide du Call Processing Server (104) à partir d'un ensemble de numéros d'appel alternatifs réutilisables.

13. Call Processing Server pour exécuter des fonctions relatives à la technique de commutation dans l'Internet, **caractérisé en ce qu'**il est configuré pour mettre en oeuvre un procédé selon l'une des revendications précédentes.

14. Application logicielle pour faire fonctionner un Call Processing Server (104) localisé dans l'Internet, **caractérisée en ce qu'**elle implémente un procédé selon l'une des revendications 1 à 12.
